(19) Europäisches Patentamt

European Patent Office

Office européen des brevets

(11) **EP 1 517 481 B1**

(12) **EUROPEAN PATENT SPECIFICATION**

(45) Date of publication and mention
of the grant of the patent:
**25.01.2006 Bulletin 2006/04**

(51) Int Cl.:
**H04L 12/413** (2006.01)

(21) Application number: **03020937.3**

(22) Date of filing: **16.09.2003**

(54) **Response time prediction method for frames on a serial bus**

Verfahren zur Vorhersage der Ansprechzeit für Pakete über einen seriellen Bus

Appareil pour la prédiction du temps de réponse de paquets sur un bus sériel

(84) Designated Contracting States:
**AT BE BG CH CY CZ DE DK EE ES FI FR GB GR HU IE IT LI LU MC NL PT RO SE SI SK TR**

(43) Date of publication of application:
**23.03.2005 Bulletin 2005/12**

(73) Proprietor: **VOLCANO COMMUNICATION TECHNOLOGY AB**
**412 30 Västra Frölunda (SE)**

(72) Inventor: **Szakaly, Alexander**
**518 40 Sjömarken (SE)**

(74) Representative: **Lind, Urban Arvid Oskar et al**
**AWAPATENT AB,**
**P.O. Box 11394**
**404 28 Göteborg (SE)**

(56) References cited:
- **NAVET N ET AL: "Validation of in-vehicle real-time applications" COMPUTERS IN INDUSTRY, ELSEVIER SCIENCE PUBLISHERS. AMSTERDAM, NL, vol. 46, no. 2, September 2001 (2001-09), pages 107-122, XP004306472 ISSN: 0166-3615**
- **HEFFERNAN D ET AL: "Real-time design in a distributed control network application layer environment" IEE PROCEEDINGS: SOFTWARE, IEE, STEVENAGE, GB, vol. 148, no. 5, 26 October 2001 (2001-10-26), pages 149-155, XP006017605 ISSN: 1462-5970**
- **HANSSON H ET AL: "Integrating reliability and timing analysis of CAN-based systems" FACTORY COMMUNICATION SYSTEMS, 2000. PROCEEDINGS. 2000 IEEE INTERNATIONAL WORKSHOP ON PORTO, PORTUGAL 6-8 SEPT. 2000, PISCATAWAY, NJ, USA,IEEE, US, 6 September 2000 (2000-09-06), pages 165-172, XP010521808 ISBN: 0-7803-6500-3**
- **SJODIN M ET AL: "Improved response-time analysis calculations" REAL-TIME SYSTEMS SYMPOSIUM, 1998. PROCEEDINGS. THE 19TH IEEE MADRID, SPAIN 2-4 DEC. 1998, LOS ALAMITOS, CA, USA,IEEE COMPUT. SOC, US, 2 December 1998 (1998-12-02), pages 399-408, XP010318766 ISBN: 0-8186-9212-X**

**Description**

Field of Technology

The present invention relates to a method for predicting the worst case response time for a fixed priority frame in a frame queuing system in a serial bus network, such as a CAN. The invention also relates to a software module adapted to perform such a method when executed by a computer processor.

Background

In many applications, serial bus networks are used for communication between digital devices; one example is a CAN network in a vehicle. Further, the communication between these devices is typically associated with specific timing requirements, stating a maximum delay from the time a certain event takes place to the time when a corresponding function is performed. For example, it is normally appreciated if the automatic breaking system (ABS) responds quickly to a sensor signal even when the network is occupied with several other tasks (like engine control, transmission control, etc).

Such timing requirements translate into a maximum response time for frames, i.e. a maximum time period between arrival of a frame transmission request and completed transmission of the same frame.

Consequently, when designing such a network, it is critical to be able to guarantee transmission of messages (frames) within the timing requirements. In order to enable such guarantees, the network is modulated in a software design tool, and maximum response times are predicted. If the network is deemed to be too slow under present circumstances, it will have to be redesigned, or, if possible, the band width of the network bus can be improved.

The mechanism assigning priorities and handling the distribution of frames on a serial bus is referred to as scheduling, and resembles the process of scheduling tasks in e.g. a centralized computer processing system. The design tools mentioned above are based on response time analysis, in short a way to mathematically determine the delay between a request (e.g. for sending a frame on a serial bus) is made and when it is treated.

An algorithm where the task or frame currently being processed can be interrupted by a new request is referred to as a preemptive scheduling algorithm. An algorithm where the current task or frame is completed before a new request is treated is called non-preemptive.

An example of scheduling analysis for preemptive scheduling is given in the article "Finding response times in a real time system" by M. Joseph and P. Pandya, BCS Computer Journal, vol. 29, no. 5, pp. 390-395, Oct. 1986. Another example is given in the article "Improved response-time analysis calculations", by M. Sjödin et al, Real-time systems symposium, IEEE Comput. Soc, USA, 2 December 1998, pages 399-408.

The analysis was based on the assumptions that the worst case response time for tasks occurs when all types of requests enter the scheduling process simultaneously. Often, however, a given set of requests will have offset constraints, i.e. different types of requests will be constrained to execute at fixed offsets in relation to each other. Therefore, the assumption of simultaneous requests results in a pessimistic prediction.

The article "Adding time-offsets to schedulability analysis" by Ken Tindell, published as Report YCS 221, Department of Computer Science, University of York, 1994, presents a scheduling analysis for tasks in a processor allowing for such offsets. Here, tasks which have interrelated time dependencies are grouped together in so called transactions.

While this approach improves the accuracy of the predictions and reduces the pessimism, each task is restricted to have a period that is an integer multiple of the corresponding transaction period. However, when considering frames on a serial bus, frame periods can only be guaranteed to be a multiple of the frame processing period. As the offset of a task is restricted to be shorter than the transaction period, this places severe restrictions on the applicability of the method.

Therefore, despite the prior art put forward above, known scheduling analysis models still fail to provide accurate predictions of frame response times on serial bus in a digital network.

As a consequence, the available computer models of a serial bus network, such as a CAN network, are in general too pessimistic. This overly pessimistic approximation leads to unnecessary redesign, or even implementation of unnecessary band width.

Further, the nodes in a serial bus network may be restricted to only enter a given number of frames into the arbitration process. Such restrictions, normally referred to as node budgets, are imposed in order to allow the node processor to handle other tasks apart from scheduling and transmitting frames. These budgets are not considered in conventional scheduling analysis.

Summary of the invention

An object of the present invention is therefore to provide a more correct way to estimate delivery times of frames on a serial bus network, and to overcome at least some of the shortcomings of prior art methods.

This and other objects are achieved by a method of the kind mentioned by way of introduction, comprising the steps of: defining the period of the transaction as the least common multiplier (LCM) of the frame periods of the included frames; identifying a set of starting points, representing the latest possible release times for all frames in the transaction having higher or equal priority as said frame; for each starting point (s), determining a maximum duration of a sequence of frames having a higher priority as said frame that can occur starting at this starting point, identifying the next frame instance having a latest possible release time equal to or greater than this starting point, and calculating the difference between the end of said sequence and the arrival time of said frame instance, and selecting the longest of said differences for determining the frame response time.

In order to achieve an analysis that better models the transactions present in the serial bus network, the transaction concept has been redefined compared to prior art, resulting in a different approach when implementing the analysis. According to the invention, the transaction period is longer than the frame periods comprised therein, and is defined as the LCM of the frame periods. As a result, several instances of a frame of a given priority may occur in one transaction, which alters the process of estimating response time.

While conventional estimations are based on one specific instance of a frame, the method according to the invention considers all instances in the transaction.

By adjusting the prior art response time analysis schemes to the conditions of a serial bus network, the method according to the invention provides a more accurate prediction of frame response times in different stages of the processing, enabling a more efficient utilization of the network.

The queuing system can for example be the serial bus of a serial bus network, or a transmit or receive queue connected to this bus. In a complete system response time analysis, several different contributions to the application-to-application response time will have to be considered.

The step of determining the frame response time can include calculating a sum of the longest of said differences and a frame transmission time.

According to one embodiment, the set of starting points is divided into subsets, each being associated with one frame instance, and said difference is then calculated for the starting points in one such subset at a time. This leads to a somewhat different implementation, but the end result remains unchanged.

The step of calculating said maximum duration can be performed by setting a current duration to an initial value and iterating the following steps until the duration converges: determining a maximum contribution from each transaction by identifying a set of time lags between a given transaction and said starting point, determining the contribution from this particular transaction with this particular time lag, and selecting the largest contribution; determining an updated duration including a sum of all such maximum contributions; and replacing the current duration with the updated duration.

This provides an efficient numerical solution to the very difficult analytical problem of finding the longest busy period starting in a given point.

The initial value is preferably set to the longest possible transmission time of a frame with lower priority than said frame. This represents the longest possible delay that can be caused by a lower priority frame released before the frame of interest. This delay is due to the non-preemptive character of the system. Further, this delay can be included as a constant term in each updated duration, in order to make the estimation more accurate.

According to a preferred embodiment, an error term is also included as a term in each updated duration. The error term can represents the probable duration of transmission errors on the serial bus, and is typically dependent on the current busy period duration. Accordingly, the error term is recalculated for each iteration.

According to one embodiment, relating to determining the response time on a serial bus where each transmit queue is arranged to transmit a limited number of frames onto said serial bus during a given period of time, frames originating from the same transmit queue being referred to as a batch, and the step of determining a maximum contribution is performed for one batch at a time, and further comprising: determining the transmission time of the maximum number of frames the corresponding transmit queue may transmit during the current duration, and limiting said maximum contribution ($I(T)$) to said transmission time.

This embodiment modifies the method according to the invention to handle budgets, which is an important feature of e.g. some CAN systems.

Detailed description

In the following description, a *frame* refers to a class of frames having the same fixed priority. An individual frame in the queuing system is instead referred to as a *frame instance.*

The *arrival time* is the point in time when a frame instance is notionally created, and the *release time* is the point in time when this frame instance actually enters the arbitration process of the queuing system. In a perfect system, these times would coincide, but in practice there is a delay, referred to as *release jitter.* The *latest possible release time* of an instance is the arrival time plus the maximum possible jitter.

Frame instances are expected to arrive periodically, and the expected period between such arrivals is called the *frame period. Sporadic frames,* i.e. frames not having a periodic behavior, are treated as having a period equal to the shortest time between two sporadic arrivals.

From the release time, a *transmission time* will be required to complete the transmission of the frame, and this will be dependent on the amount of data placed in the body of the frame. In a non-preemptive system, like a CAN, a frame may not be interrupted when transmission has started.

Several frames that share a common time relationship are grouped together in a *transaction*, where each frame is related to the start of the transaction with an *offset.* The transaction is periodic with a *transaction period*, and each transaction occurrence is referred to as a *transaction invocation*. Note that it is not necessary that all frames having a common time relationship are grouped in *the same* transaction. In fact, according to preferred embodiments of the invention, it may be advantageous to let the frame of interest per definition be the frame with lowest priority in its transaction. This can be accomplished by grouping frames with lower priority in a separate transaction.

A sporadic frame cannot have a time relationship with other frames, and thus forms a transaction by itself. Such a sporadic transaction is treated as having a period equal to the shortest time between two sporadic arrivals.

Before a released frame instance with priority i will be transmitted by the queuing system, the transmission of any frame with a higher priority j < i must be completed (N.B. that a *higher* priority is denoted with a lower index). The period of time during which the bus is occupied with such frames is referred to as the *level i-1 busy* period. The delay between the arrival of the frame instance and the completed transmission of the instance is referred to as the *response time.*

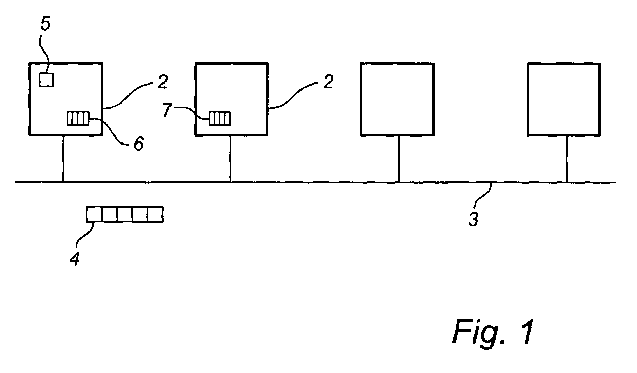

Fig 1 shows an example of a network 1 in which the present invention is applicable. The network 1 comprises a plurality of nodes 2, connected by a serial bus 3 carrying information contained in frames 4. One example of such a network is a CAN, Controller Area Network which is a simple communications standard that has gained widespread use in automotive and control applications. The CAN standard is described in detail in "CAN specification version 2.0", Robert Bosch GmbH, Stuttgart, 1991.

Each node 2 has a node controller 5, and a transmit queue 6 and a receive queue 7. Frames that are ready for transmission are inserted into the transmit queue they are allocated to, and the transmit queues are ordered by frame priorities. The node controller places frames that are waiting in the transmit queue on the serial bus by calling a frame processing routine. In order to guarantee a limited duration of such a call, every transmit queue can have a *budget*, i.e. a maximum number of frames instances that can be included in a frame processing call. The period between frame processing calls is referred to as a *frame processing period.*

A call to the frame procssing routine is made periodically, and each time the number of frames allowed by the transmit queue budget (in priority order) are taken out of the queue and copied to the controller for transmission. In some serial bus systems, e.g. the CAN implemented by Volcano Communication Technology AB, multiple queues can be allocated to a single node controller, but a frame can only be allocated to one transmit queue.

The situation is similar on the side of a receiving node. Frames received by the receiving controller are inserted into a local receive queue, and a call to a frame processing routine is made periodically. Each time, the number of frames allowed by the receive queue budget are taken out of the receive queue and processed.

The nodes in the CAN system and similar types of serial bus networks are not synchronized, which means that predefined time relationships between different frames (offsets, see above) only can exist between frames originating from the same node, and, if a node has several transmit queues, from the same transmit queue. Therefore, the frames in a transaction all originate from the same transmit queue. The collection of all transactions from a transmit queue is referred to as a *batch*. Consequently, a particular budget is always related to one particular batch.

CAN uses an arbitration protocol to resolve contention on the bus when more than one frame is ready for transmission. The arbitration protocol works in the following way: Each frame 4 starts with a unique arbitration field of 11 or 29 bits. If a CAN controller transmits a zero, the bus will reflect a zero regardless of what the other controllers have transmitted. If a CAN controller transmits a one, the bus will reflect a one only if no other controller transmitted a zero.

When the arbitration protocol starts, a controller begins to transmit the arbitration field of the highest priority frame queued in the controller starting with the most significant bit. For each bit that is transmitted the controller waits for the signals to propagate along the bus and then reads the value of the bus. If the controller transmitted a one but receives a zero this indicates that another controller is transmitting a frame with a lower value encoded into the arbitration field and therefore the controller drops out of contention and stops transmitting. After the last bit of the arbitration field has been transmitted only one controller may still be transmitting since the arbitration field is unique. In this way the value of the arbitration field is equal to a priority where a lower value means higher priority.

Middleware provided by Volcano Communication Technology AB provides an interface to the application programmer which is completely signal-based and guarantees that when a signal is written the new value will be distributed throughout the system within a certain guaranteed amount of time.

With an off-line software module called the Volcano Network Architect (VNA) the system designer is able to define the signals that build up the functionality and specify the timing constraints on those signals. Another module, referred to as a frame compiler, is adapted to compile a network configuration based on the timing requirements of different signals. The process involves packing the signals into frames and assigning parameters such as periods, priority and offset. A response time analysis is carried out in the process in order to verify that the configuration satisfies the constraints specified.

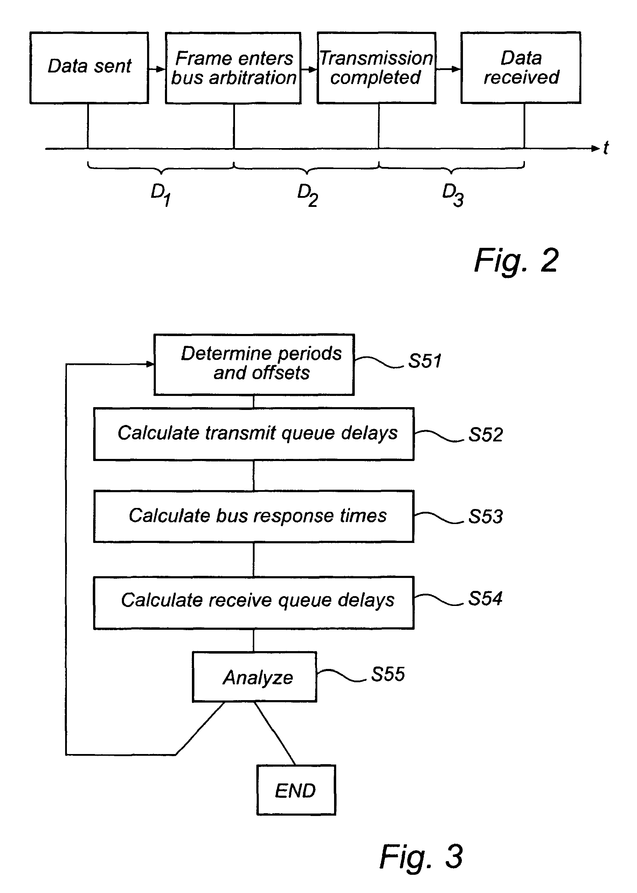

In addition to the response time caused by the CAN bus itself, the end-to-end response time (i.e. application to application) thus contains two additional parts, corresponding to the time a frame can spend waiting in the transmit and receive queues. Figure 2 illustrates the process. First, the data (a signal originating from an application) is sent, i.e. placed in a frame intended to be transmitted on the serial bus. The frame is placed in the transmit queue, and after a certain time D1, the frame is included in a frame processing call and enters the bus scheduling process (arbitration). The time D2 it takes for the frame to be transmitted on the bus is the response time described above. The frame then spends a certain time D3 in the receive queue before being included in a frame processing call that finally communicates the data to the receiving application.

A flow chart of a part of the process performed by the frame compiler is shown in fig 3. First, in step S51, periods and offsets are determined based on the currently available data. Then, in three consecutive steps (S52-S54), transmit queue delays, bus response times, and receive queue delays are calculated respectively. In step S55, the results are analyzed, and it is determined if the results can be improved by a further iteration. Depending on this determination, program control is returned to step S51, or the process is terminated. In practical implementations, it may be advantageous to perform the calculations in steps S52-S54 for different subsets of frames, each such subset being relevant in a particular mode of operation.

Although the following description will be focused on the response time of the serial bus, all three delays D1, D2, D3 in fig 2 can be determined according to essentially the same method, where the response time of one part is the jitter of the following. Note, however, that the effect of budgets mentioned above only needs to be considered when determining the bus response time, D2.

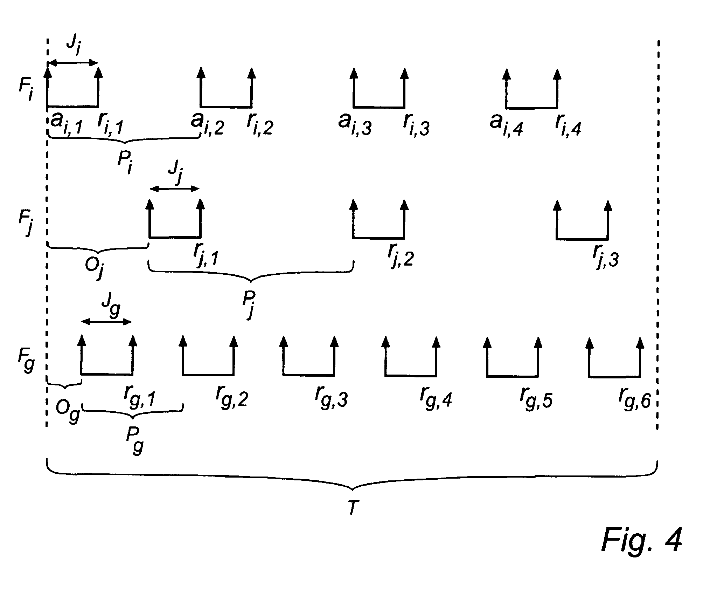

Fig 4 shows three frames $F_i$, $F_j$, $F_g$ with priorities i > j > g, and periods $p_i$, $p_j$, $p_g$. Frames $F_j$ and $F_g$ have offsets $O_j$ and $O_g$ compared to the beginning of the transaction, which in this case coincides with the arrival of frame $F_i$. According to the invention, a transaction T comprising these frames is defined to have a period equal to the least common multiplier of the three frame periods, $p_T = LCM(p_i, p_j, p_g)$, so that each transaction invocation will be identical. Each instance k of a frame $F_{i,k}$ is illustrated by two joined arrows, a first arrow indicating the arrival time of the instance, $a_{i,k}$, and a second indicating the latest possible release time, $r_{i,k}$. The time between the arrows is the jitter, $J_i$.

In order to determine the response time $R_{i,k}$ of instance k of a frame with priority i, a level i-1 busy period (w) must be determined for this instance. The response time is then given by:

$$R_{i,k} = \beta_{i-1,k} + w - a_{i,k} + C_i = D_{i,k} + C_i \qquad \text{Eq. 1}$$

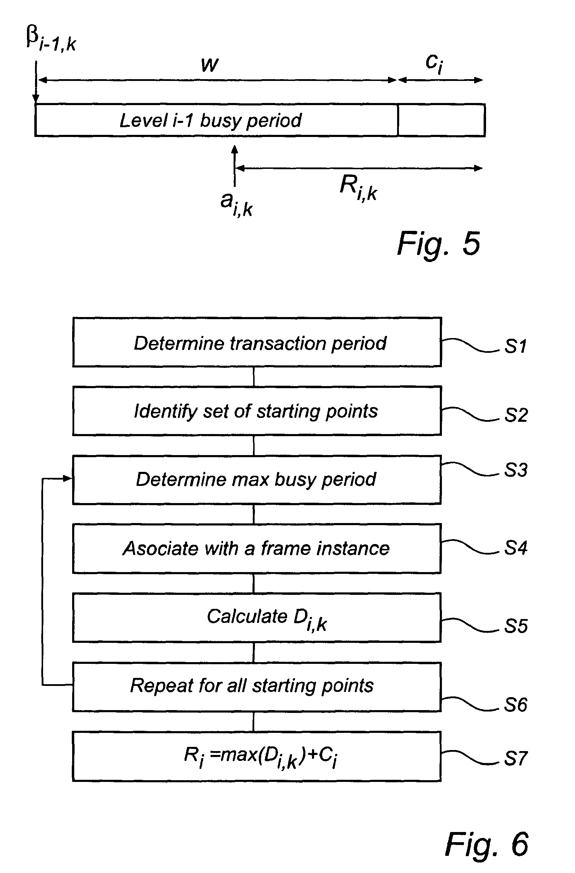

where $\beta_{i-1,k}$ is the start of the level i-1 busy period w related to instance k, $a_{i,k}$ is the arrival time of the frame, and $C_i$ is the transmission time of the frame. This is illustrated in fig 5.

The process of determining the worst case response time according to equation 1 will be described with reference to figures 6-8.

First, a set of candidate starting points is determined in step S2 (fig 6). It can be shown that the worst case level i-1 busy period must start on one of the latest possible release times of one of the frames instances with priority j ≥ i (higher or equal priority). In the transaction shown in fig 4, these candidate starting points are denoted $r_{i,1}$ - $r_{i,4}$, $r_{j,1}$ - $r_{j,3}$ and $r_{g,1}$ - $r_{g,6}$.

For each of these starting points, s, the length of the corresponding maximum level i-1 busy period w is determined (step S3), and the frame instance k having a latest possible release time $r_{i,k}$ on or after the corresponding starting point s ($r_{i,k} \geq s$) is identified (step S4). In fig 4, the points $r_{i,2}$, $r_{j,1}$, $r_{g,1}$ and $r_{g,2}$ are associated with instance 2, $r_{i,3}$, $r_{j,2}$ and $r_{g,3}$ are associated with instance 3, $r_{i,4}$, $r_{g,4}$ and $r_{g,5}$ with instance 4, and $r_{i,1}$, $r_{j,3}$ and $r_{g,6}$ with instance 1.

In principle, $r_{j,3}$ and $r_{g,6}$ are associated with instance 1 of the next invocation of the transaction, but due to the definition of the transaction period made above, the association between starting points and instances is allowed to "wrap around" the same transaction. As equation 1 assumes that the busy period starts before the latest release of the frame instance, the skilled person realizes that in this case, the correct start of the busy period $\beta_{i-1,k}$ is in fact the point $r_{j,3}$ or $r_{g,6}$ subtracted by the transaction period $p_T$.

The difference $D_{i,k}$ between s+w and $a_{i,k}$, which is the first term of equation 1, is calculated in step S5, and the steps S3 to S5 are repeated for all starting points (step S6). In step S7, the worst case response time, $R_i$, is then found

by selecting the largest of the calculated differences and adding the frame transmission time, according to:

$$R_i = \max(D_{i,k}) + C_i.$$

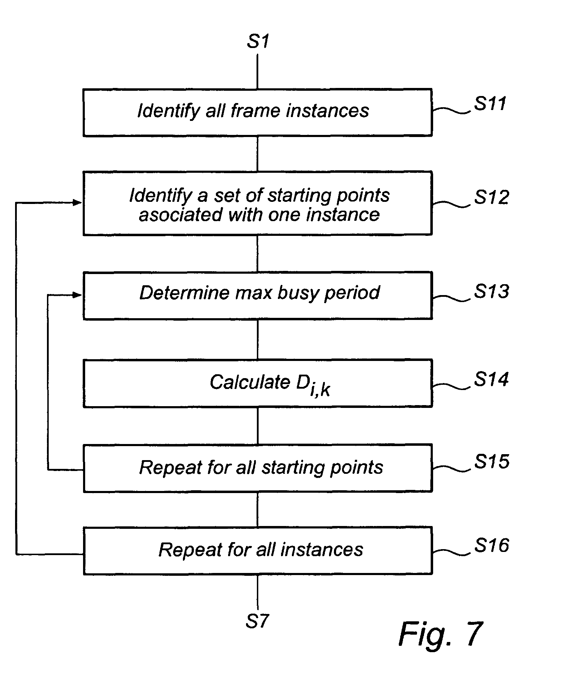

An alternative, but entirely equivalent, approach is shown in fig 7, where the steps S11 to S16 replace the steps S2 to S6 in fig 6. Here, the frame instances of the transaction are determined first (step S11), and then a set of candidate starting points associated with this instance is determined (step S12). This set is of course a subset to the complete set in step S2. The steps S13 to S15 correspond to the steps S3, S5 and S6, the step S4 being unnecessary as the instance is known. Then, in step S16, the steps S12 to S15 must be repeated for each instance.

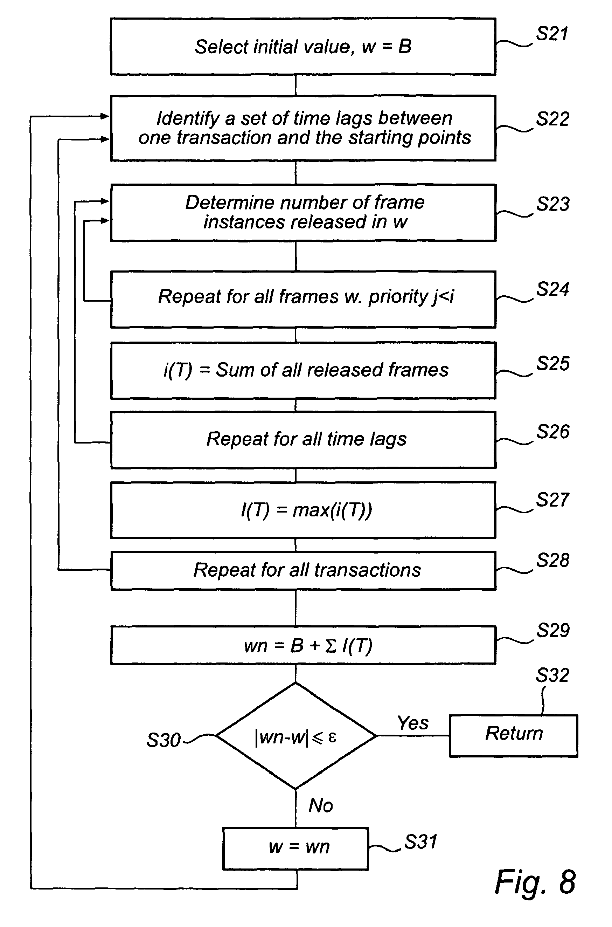

The step of determining the duration of the maximum busy period (S3 and S13) will be described more in detail with reference to fig 8. The routine described here will be called upon with input variables i (priority of the frame) and s (starting point of interest).

First, in step S21, an initial value for the duration w is chosen. This value corresponds to the blocking factor B during which the bus may be blocked by a lower priority frame, and is equal to the longest transmission time for a frame with priority j > i. Note that this blocking factor may result also from a non-real-time frame (which is not part of the analysis), and thus should be set to the longest possible transmission time for the serial bus. On a typical CAN bus, this is the transmission time of an eight byte frame.

Then a set of candidate time lags between a particular transaction T and the busy period starting point s is identified in step S22. Similar to the situation with starting points above, it can be shown that the transaction will have the greatest impact on the busy period if the starting point s occurs on the latest possible release time of a frame with priority j < i in the transaction.

Then, in step S23 to S26, a contribution i(T) from this particular transaction to the duration of the busy period w is determined for each candidate time lag. First (step S23 and S24) it is determined how many frames with priority j < i belonging to the transaction T that can be released within the busy period of duration w. Note that it is possible that several invocations of the transaction may occur within the busy period.

In step S25, all released frames (priority j < i) are summated, to generate the contribution i(T), and the process is repeated for all time lags in the set (step S26). The maximum possible contribution from a transaction, I(T), is selected in step S27, and the steps S22 to S27 are repeated for all transactions (step S28).

Note that the steps S22 to S28 are performed also for the transaction to which the frame of interest belongs. In this particular case, however, there is only one possible time lag (the starting point s is fixed in the transaction), and the steps S23 and S25 are only repeated once.

In step S29, a new value for the duration, wn, is determined as wn = B + ΣI(T), and the new duration wn is compared to the current duration w in step S30. If they are equal, the process is ended in step S32, and program control returns to step S4 or S14. If not, w is replaced by wn, and the steps S22 to S30 are repeated (step S31). The steps S30 to S32 correspond to an iteration of the process until the duration w converges.

When comparing wn and w, differences smaller than the time required to transmit one bit on the serial bus, $T_{BIT}$, will not considered. In fact, the method is advantageously implemented using only integer numbers (instead of float numbers), where each integer step represents $T_{BIT}$.

In order to handle the influence of transmission errors in the estimation, wn can include a third term, $E(w+C_i)$, which represents the time required for all types of errors on the bus during the time period $w+C_i$. The skilled person will be familiar with different ways to estimate E.

In the process described above, each iteration is based on the current value, w. Alternatively, the determination in step S23 can be based on the new duration, wn, which is updated for each transaction. Such an update can include calculating wn = wn + I(T), just after step S27 where the contribution I(T) from a particular transaction has been determined. At the same time, the previously iterated contribution from this transaction must be deducted from wn, and this can be done by calculating wn = wn - I(T), just before step S27 where I(T) is updated.

The above variation requires some further initializations in step S21, namely that the new duration value, wn, is set to B, and that the set of maximum contributions I are set to zero.

As a further improvement, the busy period duration used in step S23 can be compensated for the contribution from the transaction currently being investigated. However, note that simply subtracting the contribution I(T) calculated in the previous iteration will risk resulting in a too optimistic busy period. Instead, a more elaborate compensation must be performed.

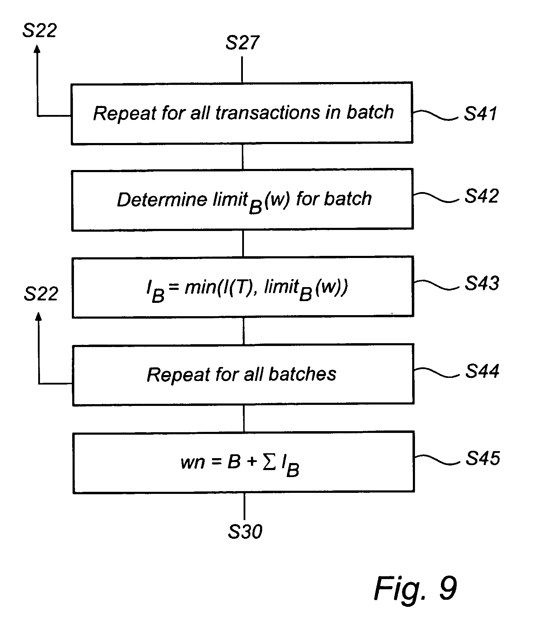

Fig 9 illustrates a sequence that can replace the steps S28 and S29 of the process in fig 8, in order to handle the effect of budgets and thereby further shorten the worst case response time.

Step S41, replacing step S28 in fig 8, repeats step S22 to S26 for all transactions in a batch. Then, in step S42, a limitation on the total contribution from this batch ($I_B$) is determined in the following way. First, the maximum number of frames, $n_B$, that can be transmitted during the current busy period duration, w, is determined as

$$n_B = b_B \times \frac{J_B + w}{fp_B}$$

where $b_B$ is the number of frames in the node budget, $fp_B$ is the frame processing period of the node, and $J_B$ is the possible delay of a frame processing call. Note that $n_B$ is rounded up to the closest integer value.

As the frame processing period $fp_B$ is defined as the time between two consecutive frame processing calls, the time between actual release of frames (i.e. completion of these calls) may be shorter, if the first call is delayed more than the next. Therefore, the maximum possible delay, $J_B$, must be added to the current duration in order not to result a too optimistic limitation.

The limitation, $limit_B(w)$, is then calculated as the maximum transmission time of $n_B$ frames. In order to facilitate this calculation, the transmission time of each transmitted frame can be approximated with the maximum transmission time of any frame in the batch with priority j < i, but more elaborate calculations can be envisaged.

In step S43, the batch contribution, $I_B$, is determined as $I_B = min(I(T), limit_B(w))$, and the process starting in step S22 is repeated for all batches (step S44). Step S45 replaces step S29 in fig 8, calculating the new value, wn, as wn = B + $\sum I_B$. Again, wn can include a third term, $E(w+C_i)$. Program control then continues to step S30 in fig 8.

It is clear that the skilled person can make numerous modifications to the above described preferred embodiments without departing from the invention as defined by the claims. For example, as mentioned above, the method can easily be adapted to e.g. transmit queues and receive queues in a CAN, in order to provide a complete response time analysis. Although the effect of budgets is not present in these cases, a similar restriction due to the transmission rate will be present in the receive queues.

Naturally, the method is applicable to other types of serial bus networks as well, with only minor adjustments.

**Claims**

1.  A method for predicting the worst case response time for a frame in a frame queuing system, said frame having a fixed priority (i) and an expected frame period ($p_i$), and belonging to a transaction (T) including several frames with different priorities and different frame periods, comprising:

    defining the period of the transaction as the least common multiplier, LCM, of the frame periods of the included frames;
    identifying a set of starting points (s), representing the latest possible release times for all frame instances in the transaction (T) having higher or equal priority (j ≤ i) as said frame;
    for each starting point (s), determining a maximum duration (w) of a sequence of frames having a higher priority as said frame that can occur starting at this starting point (s), identifying the next frame instance ($F_{i,k}$) having a latest possible release time ($r_{i,k}$) equal to or greater than this starting point (s), and calculating the difference ($D_{i,k}$) between the end of said sequence (s + w) and the arrival time ($a_{i,k}$) of said frame instance ($F_{i,k}$), and selecting the longest of said differences ($D_{i,k}$) for determining the frame response time.

2.  A method according to claim 1, wherein said frame queuing system is a receive queue (7) in a node (2) of a serial bus network (1), such as a Controller Area Network.

3.  A method according to claim 1, wherein said frame queuing system is a transmit queue (6) in a node (2) of a serial bus network (1), such as a Controller Area Network.

4.  A method according to claim 1, wherein said frame queuing system is a serial bus (3), connecting several nodes (2) of a serial bus network (1), such as a Controller Area Network.

5.  A method according to one of claims 1 to 4, wherein the frame response time is determined as the sum of the longest of said differences ($D_{i,k}$) and a frame transmission time ($C_i$).

6.  A method according to any one of the preceding claims, wherein said set of starting points is divided into subsets, each being associated with one frame instance ($F_{i,k}$), and wherein said difference ($D_{i,k}$) is calculated for the starting points in one such subset at a time.

7. A method according to any one of the preceding claims, wherein the step of calculating said maximum duration is performed by setting a current duration (w) to an initial value (B) and iterating the following steps until the duration converges:

    determining a maximum contribution (I(T)) from each transaction (T) by:

        identifying a set of time lags between a given transaction (T) and said starting point, determining the contribution (i(T)) from this particular transaction with this particular time lag, and selecting the largest contribution (I(T) = max(i(T)));
        determining an updated duration (wn) including a sum of all such maximum contributions (ΣI(T)); and
        replacing the current duration (w) with the updated duration (wn).

8. A method according to claim 7, wherein said initial value (B) is the longest possible transmission time of a frame with lower priority (j > i) than said frame.

9. A method according to claim 8, wherein said initial value (B) is included as a constant term in each updated duration (wn).

10. A method according to claim 7 to 9, wherein an error term is included in each updated duration (wn).

11. A method according to one of claims 7 to 10, wherein said frame queuing system is a serial bus (3), connecting several nodes (2) of a serial bus network (1), such as a Controller Area Network, and wherein
a transmit queue is arranged to transmit a limited number ($b_B$) of frames onto said serial bus during a given period of time,
frames originating from the same transmit queue are referred to as a batch, and
the step of determining a maximum contribution (I(T)) is performed for one batch at a time, and further comprises:

    determining the transmission time (limit(w)) of the maximum number of frames the corresponding transmit queue may transmit during the current duration (w), and
    limiting said maximum contribution (I(T)) to said transmission time (limit(w)).

12. A software module adapted to perform the method according to one of the preceding claims when executed by a computer processor.

**Patentansprüche**

1. Verfahren zur Vorhersage der ungünstigsten Ansprechzeit auf einen Datenblock in einem Datenblock-Wartesystem, wobei der Datenblock eine festgelegte Priorität (i) und eine erwartete Frameperiode ($p_i$) besitzt und zu einer Transaktion (T) gehört, die mehrere Datenblöcke mit unterschiedlichen Prioritäten und unterschiedlichen Frameperioden einschliesst, umfassend:

    Definition der Transaktionsperiode als kleinster gemeinsamer Faktor, LCM (least common multiplier), der Frameperioden der einbezogenen Datenblöcke;
    Identifizierung einer Menge von Anfangspunkten (s), die die spätesten möglichen Freigabezeiten für alle Datenblockinstanzen in der Transaktion (T) darstellen, die eine höhere Priorität als oder die gleiche Priorität wie der benannte Datenblock (j ≤ i) besitzen;
    für jeden Anfangspunkt (s) Bestimmung einer maximalen Zeitdauer (w) einer Folge von Datenblöcken mit höherer Priorität als der benannte Datenblock, die an diesem Anfangspunkt (s) beginnend auftreten können,
    Identifizierung der nächsten Datenblockinstanz ($F_{i,k}$), die eine späteste mögliche Freigabezeit ($r_{i,k}$) besitzt, die diesem Anfangspunkt (s) gleich oder grösser ist, und Berechnung der Differenz ($D_{i,k}$) zwischen dem Ende der benannten Folge (s + w) und der Ankunftszeit ($a_{i,k}$) der benannten Datenblockinstanz ($F_{i,k}$), und
    Auswahl der längsten der Differenzen ($D_{i,k}$) zur Festlegung der Datenblock-Ansprechzeit.

2. Verfahren nach Anspruch 1, **dadurch gekennzeichnet, dass** das Datenblock-Wartesystem eine Empfangs-Warteschlange (7) in einem Knoten (2) eines seriellen Busnetzes (1) wie eines Controller Area Networks (Steuergerätenetzes) ist.

3. Verfahren nach Anspruch 1, **dadurch gekennzeichnet, dass** das Datenblock-Wartesystem eine Sende-Warteschlange (6) in einem Knoten (2) eines seriellen Busnetzes (1) wie eines Controller Area Networks ist.

4. Verfahren nach Anspruch 1, **dadurch gekennzeichnet, dass** das Datenblock-Wartesystem ein serieller Bus (3) ist, der mehrere Knoten (2) eines seriellen Busnetzes (1) wie eines Controller Area Networks verbindet.

5. Verfahren nach einem der Ansprüche 1 bis 4, **dadurch gekennzeichnet, dass** die Datenblock-Ansprechzeit als die Summe der längsten der Differenzen ($D_{i,k}$) und einer Datenblock-Übertragungszeit ($C_i$) bestimmt wird.

6. Verfahren nach einem der vorangehenden Ansprüche, **dadurch gekennzeichnet, dass** die Menge der Anfangspunkte in Untermengen unterteilt wird, deren jede mit jeweils einer Datenblockinstanz ($F_{i,k}$) verbunden ist, und **dadurch**, dass die Differenz ($D_{i,k}$) für die Anfangspunkte in jeweils einer solchen Teilmente auf einmal berechnet wird.

7. Verfahren nach einem der vorangehenden Ansprüche, **dadurch gekennzeichnet, dass** der Schritt der Berechnung der maximalen Zeitdauer ausgeführt wird, indem eine aktuelle Zeitdauer (w) als Anfangswert (B) gesetzt wird und die folgenden Schritte wiederholt werden, bis die Zeitdauer konvergiert:

   Bestimmung eines maximalen Beitrages (I(T)) jeder Transaktion (T) durch:

   Identifizierung einer Menge von zeitlichen Verzögerungen zwischen einer gegebenen Transaktion (T) und dem benannten Anfangspunkt, Bestimmung des Beitrages (i(T)) dieser spezifischen Transaktion mit dieser spezifischen zeitlichen Verzögerung und Auswahl des grössten Beitrages (I(T) = max(i(T)));
   Bestimmung einer aktualisierten Zeitdauer (wn) einschliesslich einer Summe aller solcher maximaler Beiträge ($\sum$I(T)); und
   Ersatz der aktuellen Zeitdauer (w) durch die aktualisierte Zeitdauer (wn).

8. Verfahren nach Anspruch 7, **dadurch gekennzeichnet, dass** der benannte Anfangswert (B) die längste mögliche Übertragungszeit eines Datenblockes mit niedrigerer Priorität (j > i) als der benannte Datenblock ist.

9. Verfahren nach Anspruch 8, **dadurch gekennzeichnet, dass** der benannte Anfangswert (B) als ein konstantes Glied in jede aktualisierte Zeitdauer (wn) einbezogen wird.

10. Verfahren nach Anspruch 7 bis 9, **dadurch gekennzeichnet, dass** ein Fehlerglied in jede aktualisierte Zeitdauer (wn) einbezogen wird.

11. Verfahren nach einem der Ansprüche 7 bis 10, **dadurch gekennzeichnet, dass** das Datenblock-Wartesystem ein serieller Bus (3) ist, der mehrere Knoten (2) eines seriellen Busnetzes (1) wie eines Controller Area Networks verbindet, und **dadurch**, dass
   eine Übertragungswarteschlange ausgelegt ist, um während einer gegebenen Zeitdauer eine begrenzte Anzahl ($b_B$) von Datenblöcken auf den seriellen Bus zu übertragen,
   aus der gleichen Übertragungswarteschlange stammende Datenblöcke als ein Batch bezeichnet werden, und
   der Schritt, einen maximalen Beitrag (I(T)) zu bestimmen, für jeweils einen Batch auf einmal ausgeführt wird, und weiter umfasst:

   Bestimmung der Übertragungszeit (limit(w)) der maximalen Anzahl von Datenblöcken, die die entsprechende Übertragungswarteschlange während der aktuellen Zeitdauer (w) übertragen kann, und
   den maximalen Beitrag (I(T)) zur benannten Übertragungszeit (limit(w)) zu begrenzen.

12. Softwaremodul, dafür geeignet, das Verfahren nach einem der vorangehenden Ansprüche durchzuführen, wenn durch einen Computerprozessor ausgeführt.


**Revendications**

1. Procédé pour prédire le temps de réponse dans le pire cas d'une trame dans un système de file d'attente de trame, ladite trame ayant une priorité fixe (i) et une période de trame attendue ($p_i$), et appartenant à une transaction (T) incluant diverses trames avec des priorités différentes et des périodes de trame différentes, comprenant les étapes consistant à :

définir la période de la transaction comme le multiplicateur le moins commun LCM des périodes de trame des trames incluses ;

identifier un ensemble de points de début (s), représentant les temps de libération possibles les plus tard pour toutes les instances de trame dans la transaction (T) ayant une priorité plus élevée ou égale ($j \leq i$) comme ladite trame ;

pour chaque point de début (s), déterminer une durée maximum (w) d'une séquence de trames ayant une priorité plus élevée comme ladite trame qui peut se produire en commençant à ce point ou à ces points de début (s), identifier l'instance de trame suivante ($F_{i,k}$) ayant un temps de libération possible le plus tard ($r_{i,k}$) égal à ou plus grand que ce point de début ou ces points de début, et

calculer la différence ($D_{i,k}$) entre la fin de ladite séquence (s + w) et le temps d'arrivée ($a_{i,k}$) de ladite instance de trame ($F_{i,k}$), et

sélectionner la plus longue desdites différences ($D_{i,k}$) pour déterminer le temps de réponse de trame.

2. Procédé selon la revendication 1, dans lequel ledit système de file d'attente de trame est une file d'attente de réception (7) dans un noeud (2) d'un réseau de bus série (1), tel qu'un réseau de zone de contrôleur.

3. Procédé selon la revendication 1, dans lequel ledit système de file d'attente de trame est une file d'attente de transmission (6) dans un noeud (2) d'un réseau de bus série (1), tel qu'un réseau de zone de contrôleur.

4. Procédé selon la revendication 1, dans lequel ledit système de file d'attente de trame est un bus série (3), connectant divers noeuds (2) d'un réseau de bus série (1), tel qu'un réseau de zone de contrôleur.

5. Procédé selon l'une quelconque des revendications 1 à 4, dans lequel le temps de réponse de trame est déterminé comme la somme de la plus longue desdites différences ($D_{i,k}$) et d'un temps de transmission de trame (Ci).

6. Procédé selon l'une quelconque des revendications précédentes, dans lequel ledit ensemble de points de début est divisé en sous-ensembles, chacun étant associé à une instance de trame ($F_{i,k}$), et dans lequel ladite différence ($D_{i,k}$) est calculée pour les points de début dans un tel sous-ensemble en une fois.

7. Procédé selon l'une quelconque des revendications précédentes, dans lequel l'étape de calcul de ladite durée maximale est effectuée en établissant une durée actuelle (w) à une valeur initiale (B) et en itérant les étapes suivantes jusqu'à ce que la durée converge ;

déterminant une contribution maximale (I(T)) à partir de chaque transaction (T) par :

identifier un ensemble de retards de temps entre une transaction donnée (T) et ledit point de début, déterminer la contribution (i(T)) à partir de cette transaction particulière avec ce retard de temps particulier et sélectionner la contribution la plus grande (I(T) = max(i(T))) ;

déterminer une durée de mise à jour (wn) incluant une somme de la totalité de ces contributions maximales ($\sum I(T)$) ; et remplacer la durée actuelle (w) par la durée mise à jour (wn).

8. Procédé selon la revendication 7, dans lequel ladite valeur initiale (B) est le temps de transmission possible le plus long d'une trame avec une priorité inférieure (j > i) que ladite trame.

9. Procédé selon la revendication 8, dans lequel ladite valeur initiale (B) est incluse comme terme constant dans chaque durée mise à jour (wn).

10. Procédé selon les revendications 7 à 9, dans lequel un terme d'erreur est inclus dans chaque durée mise à jour (wn).

11. Procédé selon l'une quelconque des revendications 7 à 10, dans lequel ledit système de file d'attente de trame est un bus série (3), connectant divers noeuds (2) d'un réseau de bus série (1), tel qu'un réseau de zone de contrôleur, et dans lequel

une file d'attente de transmission est conçue pour transmettre un nombre limité ($b_B$) de trames sur ledit bus série pendant une période de temps donnée,

les trames sortant de la même file d'attente de transmission sont appelées lot, et

l'étape de détermination d'une contribution maximale (I(T)) est effectuée pour un lot en une fois, et comprend de plus :

déterminer le temps de transmission (limit(w)) du nombre maximal de trames que la file d'attente de transmission correspondante peut transmettre pendant la durée actuelle (w), et

limiter ladite contribution maximale (I(T)) au dit temps de transmission (limit(w)).

12. Module logiciel adapté pour exécuter le procédé selon l'une quelconque des revendications précédentes lorsqu'exécuté par un processeur d'ordinateur.

*Fig. 1*

Fig. 2

Fig. 3

Fig. 4

$$\beta_{i-1,k}$$

$$w \qquad c_i$$

| Level i-1 busy period |  |
|---|---|

$$a_{i,k} \qquad R_{i,k}$$

## Fig. 5

| Determine transaction period | S1 |
|---|---|
| Identify set of starting points | S2 |
| Determine max busy period | S3 |
| Asociate with a frame instance | S4 |
| Calculate $D_{i,k}$ | S5 |
| Repeat for all starting points | S6 |
| $R_i = max(D_{i,k}) + C_i$ | S7 |

## Fig. 6

*S1*

| Identify all frame instances | *S11* |

| Identify a set of starting points asociated with one instance | *S12* |

| Determine max busy period | *S13* |

| Calculate $D_{i,k}$ | *S14* |

| Repeat for all starting points | *S15* |

| Repeat for all instances | *S16* |

*S7*

*Fig. 7*

| Select initial value, w = B | S21 |

| Identify a set of time lags between one transaction and the starting points | S22 |

| Determine number of frame instances released in w | S23 |

| Repeat for all frames w. priority j<i | S24 |

| i(T) = Sum of all released frames | S25 |

| Repeat for all time lags | S26 |

| I(T) = max(i(T)) | S27 |

| Repeat for all transactions | S28 |

| wn = B + Σ I(T) | S29 |

S30 — $|wn\text{-}w| \leqslant \varepsilon$ — Yes — Return — S32

No

| w = wn | S31 |

*Fig. 8*

S22

S27

| | |
|---|---|
| Repeat for all transactions in batch | S41 |

| | |
|---|---|
| Determine $limit_B(w)$ for batch | S42 |

S22

| | |
|---|---|
| $I_B = min(I(T), limit_B(w))$ | S43 |

S22

| | |
|---|---|
| Repeat for all batches | S44 |

| | |
|---|---|
| $wn = B + \sum I_B$ | S45 |

S30

*Fig. 9*